(19) Europäisches Patentamt

European Patent Office

Office européen des brevets

(11) **EP 1 048 679 A2**

(12) **EUROPÄISCHE PATENTANMELDUNG**

(43) Veröffentlichungstag:
02.11.2000 Patentblatt 2000/44

(21) Anmeldenummer: **00107993.8**

(22) Anmeldetag: **18.04.2000**

(51) Int. Cl.[7]: **C08G 18/12**, C08G 18/48,
C08G 18/79, C08G 18/40,
C08G 18/32, C14C 11/00,
C09D 175/04

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **28.04.1999 DE 19919163**

(71) Anmelder: **BAYER AG**
**51368 Leverkusen (DE)**

(72) Erfinder:
• **Hassel, Tillmann, Dr.**
  **50259 Pulheim (DE)**
• **Pisaric, Karl**
  **50259 Pulheim (DE)**
• **Schäfer, Walter, Dr.**
  **42799 Leichlingen (DE)**
• **Lüssmann, Jörg, Dr.**
  **41539 Dormagen (DE)**
• **Oeckl, Siegfried, Dr.**
  **50169 Kerpen-Horrem (DE)**
• **Kraft, Albrecht**
  **56429 Höhn-Oellingen (DE)**

(54) **Isocyanathaltige Bindemittel**

(57)  Isocyanathaltige funktionelle Bindemittel mit einem - bezogen auf Bindemittel-NCO-Gehalt von 2 bis 8 Gew.-% aufgebaut aus:

a) 20 bis 90 Gew.-% eines Ethylenoxid-haltigen Copolyethers der mittleren Molmasse 2500 bis 6000, einer OH-Funktionalität von 3 und einem Gehalt an Ethylenoxid von 5 bis 20 Gew.-%, wobei mehr als 90 Gew.-% der Ethylenoxid-Einheiten als Block vorliegen,

b) 0 bis 50 Gew.-%, vorzugsweise 10 bis 50 Gew.-% eines Ethylenoxid-haltigen Copolyethers der mittleren Molmasse 1500 bis 3000, einer OH-Funktionalität von 2 und einem Gehalt an Ethylenoxid von 40 bis 60 Gew.-%, wobei weniger als 20 Gew.-% der Ethylenoxid-Einheiten als Block vorliegt.

c) 0 bis 30 Gew.-% eines Ethylenoxid-freien Diols der mittleren Molmasse 1500 bis 3000,

d) 10 bis 30 Gew.-% eines Diisocyanats der mittleren Molmasse 140 bis 340 und

e) 0 bis 10 Gew.-% eines Polyisocyanats der NCO-Funktionalität 2,5 bis 4,5

wobei der Gesamtethylenoxidgehalt von a) + b) 5 bis 40 Gew.-% beträgt, das Molverhältnis von b) zu a) 0 bis 3 beträgt und das Valverhältnis OH von a) + b) +c) zu NCO von d) kleiner 0,5 ist.

**Beschreibung**

Die Erfindung betrifft isocyanathaltige Bindemittel, ein Verfahren zu ihrer Herstellung, darauf basierende Polyurethanharnstoffe sowie mit diesen Polyurethanharnstoffen beschichtete Substrate.

Die Reaktivbeschichtung von Substraten mit Polyurethanen ist an sich bekannt. Man appliziert dabei, vorzugsweise mittels einer Sprühpistole, die gegebenenfalls in einem geeignetem Lösemittel gelösten Ausgangsprodukte.

Gemäß dem Stand der Technik werden Isocyanatgruppen aufweisende Prepolymere und ausgewählte Polyamine, z.B. reaktionsfähige aromatische oder sterisch gehinderte Polyamine intensiv vermischt, und entweder direkt auf ein zu beschichtendes Substrat oder vorzugsweise auf einen einstweiligen Träger aufgesprüht und anschließend das zu beschichtende Substrat, z. B. Leder, Papier, Vliesstoffe oder textile Bahnen zukaschiert und die beschichtete Ware in einen Trockenkanal zur Weiterreaktion der Beschichtung transportiert. Anschließend zieht man das weitgehend ausreagierte Material vom Trennträger ab. Repräsentativ für diesen Stand der Technik sind z. B. DE-OS 1 570 524 (US-PS 3 475 266) ; DE-AS 2 637 115 (US-PS 4 108 842) und DE-OS 2 826 232 sowie die dort zitierte Literatur.

Vorteilhaft ist die - bei Vorhandensein der entsprechenden Anlage - sehr einfache Technologie und die resultierenden hohen physikalischen Echtheiten sowie die Abbildungsgenauigkeit der resultierenden Beschichtung.

Nachteilig ist der aus Viskositätsgründen erforderliche Bedarf an Lösemittel und die schlechte Wasserdampfdurchlässigkeit der beschichteten Substrate, besonders Leder.

Zur Erhöhung der Wasserdampfdurchlässigkeit wird in der EP 319 816 (DE 3 741 538) ein Reaktivsystem vorgeschlagen, dessen Bindemittelkomponente durch einen hohen Gehalt an Ethylenoxideinheiten hoch hydrophil eingestellt ist.

Nachteilig ist aber, daß dies unter üblichen Lagerbedingungen bei angebrochenen Gebinden zu Lagerstabilitätsproblemen führen kann, sofern Luftfeuchtigkeit nicht sorgfältig auszuschließen ist.

Ein weiterer erheblicher Nachteil ist, daß bei diesem System die reaktionskinetischen Parameter nur dann die zur technischen Herstellung einer Beschichtung erforderlichen Werte erreichen, wenn in Gegenwart erheblicher Mengen Wasser und deutlichem stöchiometrischem Unterschuß der Aminkomponente gearbeitet wird. Dies führt zu einer schaumigen Beschichtung.

Deshalb ist die Art der unter Verwendung dieses Systems herstellbaren beschichteten Leder begrenzt; insbesonders können keine Artikel mit Anilincharakter oder sehr glatter Oberfläche gefertigt werden.

Gemäß EP-784 097 werden wasserdampfdurchlässige Beschichtungen durch Verwendung von Poyurethanen erreicht, die Ethylenoxid-Einheiten und ionische Gruppe enthalten. Ein derartiger Aufbau ist bei 2-K-Reaktivsystemen aber nicht günstig, weil ionische Gruppen im Prepolymer die Lagerstabilität verschlechtern.

Es bestand daher die technische Aufgabe, ein Polyurethansystem zur Reaktivbeschichtung flexibler Substrate - besonders Leder - zur Verfügung zu stellen, welches einerseits hohe Wasserdampfdurchlässigkeit gewährleistet, und dessen Bindemittelkomponente auch unter ungünstigen Bedingungen - wie hoher Luftfeuchtigkeit - problemlos gelagert werden kann. Weiterhin war Aufgabe, sicherzustellen, daß das Reaktivsystem selbst problemlos - insbesonders unter minimaler Schaumbildung verarbeitbar ist und dass auch bei Einsatz einer nahezu stöchiometrischen Menge an Aminkomponente die technisch erforderlichen kinetischen Parameter einstellbar sind.

Es wurde gefunden, daß diese technische Aufgabe dadurch gelöst werden kann, daß man zum Aufbau der Bindemittelkomponente (NCO-Prepolymer) des Reaktivsystems spezielle Polyether einsetzt.

Es wurde weiterhin gefunden, daß beim erfindungsgemäßem Reaktivsystem auch bei - technisch normalerweise verwendeten - Valverhältnissen NCO-Bindemittel/Amin - Härter nahe 1 die reaktionskinetischen Parameter mit eingeführten Systemen entweder direkt vergleichbar sind oder durch Katalyse sehr leicht einstellbar sind.

Als weiterer wesentlicher Vorteil der erfindungsgemäßen Bindemittel wurde eine deutlich verringerte Produktviskosität festgestellt, was bei gegebenem Lösemittelgehalt zu einem deutlich verbessertem Verlauf - und damit wesentlich glatterer Oberfläche der beschichteten Leder - führt.

Zusätzlich wird durch diese Eigenschaft der erfindungsgemäßen Bindemittel die Option eröffnet, Beschichtungssysteme mit verringertem Lösemittelgehalt zu Verfügung zu stellen.

Auch das günstige Viskositäts - und reaktionskinetische Verhalten der erfindungsgemäßen Bindemittel wird durch den Stand der Technilk nicht nahegelegt.

Gegenstand der Erfindung sind daher

1) Isocyanathaltige Bindemittel mit einem - bezogen auf Bindemittel - NCO - Gehalt von 2 - 8 Gew.-%, aufgebaut aus:

a) 20 bis 90 Gew. % eines Ethylenoxid-haltigen Copolyethers der mittleren Molmasse 2500 bis 6000, einer OH-Funktionalität von 3 und einem Gehalt an Ethylenoxid von 5 bis 20 Gew.-%, wobei mehr als 90 Gew.-% der Ethylenoxideinheiten als Block vorliegen,

b) 0 bis 50 Gew.-% vorzugsweise 10 bis 50 Gew.-% eines Ethylenoxidhaltigen Copolyethers der mittleren Molmasse 1500 bis 3000, einer OH-Funktionalität von 2 und einem Gehalt an Ethylenoxid von 40 bis 60 Gew.-%, wobei weniger als 20 Gew.-% der Ethylenoxideinheiten als Block vorliegen,

c) 0 bis 30 Gew. % eines Ethylenoxid—freien Diols der mittleren Molmasse 1500 bis 3000,

d) 10 bis 30 Gew. % eines Diisocyanats der mittleren Molmasse 140 bis 340 und

e) 0 bis 10 Gew. % eines Polyisocyanats der NCO-Funktionalität 2,5 bis 4,5

wobei der Gesamtethylenoxidgehalt von a) + b) 5 bis 40 Gew.-% beträgt, das Molverhältnis von b) zu a) 0 bis 3 beträgt und das Valverhältnis OH von a) + b) + c)  zu NCO von d) kleiner 0,5 ist.

Die Copolyether a) sind solche der an sich bekannten Art. Sie werden vorzugsweise hergestellt durch Copolymerisation der Monomeren unter saurer oder basischer Katalyse. Geeignete Katalysatoren sind Protonsäuren wie z.B. Schwefelsäure, Lewis-Säuren wie z.B. $BF_3$, Basen wie z.B. NaOH. Die Funktionalität wird durch die Auswahl des Starters bestimmt, das Mittlere Molgewicht (Zahlenmittel) kann durch das Verhältnis Comonomeren zu Starter eingestellt werden. Ein gewünschter Blockaufbau der Copolyether wird durch den Zugabemodus der Comonomeren sichergestellt.

Geeignete Starter sind beispielsweise trifunktionelle Alkohole wie Glyzerin, Trimethylolpropan, aber auch durch Formaldehydkondensation erhältliche Alkoholgemische der mittleren Funktionalität 3. Es können auch Amine und Aminoalkohole mit einer unter den Synthesebedingungen wirksamen Funktionalität 3 eingesetzt werden. Derartige Starter sind beispielsweise Ammoniak, N-Methyl-ethylendiamin, Ethanolamin, Diethanolamin, Triethanolamin. Die Starter können auch als Gemische eingesetzt werden.

Als Comonomere zum Aufbau der Ethylenoxid-haltigen Copolyether sind neben Ethylenoxid beispielsweise Propylenoxid, 1,2-Butylenoxid, 2,3-Butylenoxid, Epoxide aus α-Olefinen, Tetrahydrofuran geeignet. Bevorzugt sind Propylenoxid und Tetrahydrofuran.

Auch die Copolyether b) sind an sich bekannt.

Bezüglich Synthese, Funktionalität, Molmasse, Blockaufbau, geeignete und bevorzugte Comonomere gilt das für die Copolyether a) bereits Gesagte.

Geeignete Starter für die Copolyether b) sind neben Wasser auch Diole wie z.B: Ethylenglykol, Propylenglykol, 1,4-Butandiol, aber auch Amine und Aminoalkohole wie N.N'-Dimethyl-ethylendiamin, Methylamin, Ethylamin, Piperazin, N-Methyl-ethanolamin, N-Methyl-diethanolamin.

Auch die ethylenoxidfreien Diole c) sind an sich bekannt. Es handelt sich um solche, wie sie zum Aufbau von Polyurethanen üblicherweise eingesetzt werden.

Geeignete Diole c) sind Polyesterdiole, Polyetherdiole, und Polycarbonatdiole.

Als Polyesterdiole sind z. B. zu nennen:

Umsetzungsprodukte von zeiwertigen Alkoholen mit zweiwertigen Carbonsäuren. Anstelle der Dicarbonsäuren können auch deren Anhydride oder deren Ester mit kurzkettigen monofunktionellen Alkoholen verwendet werden. Die Dicarbonsäuren können aliphatischer, cycloaliphatischer, aromatischer und/oder heterocyclischer Natur sein und gegebenenfalls substituiert und/oder ungesättigt sein. Als Beispiele seien genannt:

Bernsteinsäure, Adipinsäure, Phthalsäure, Sebacinsäure, Phthalsäureanhydrid, Maleinsäureanhydrid, Endomethylentetrahydrophthalsäureanhydrid, Terephthalsäuredimethylester.

Als zweiwertige Alkohole zur Herstellung der Polesterdiole kommen z.B. Propylenglykol (1,2) und (1,3), Butylenglykol (1,4), - (2,3), - (1,3), Hexandiol (1.6), Octandiol (1.8), Neopentylglykol, Cyclohexandimethanol, 2-Methyl-1,3-propandiol, Dipropylenglykol, Dibutylenglykol in Frage. Auch Polyester aus Lactonen sind einsetzbar.

Bei den besonders bevorzugten Polyesterdiolen handelt es sich um Dicarbonsäurepolyesterdiole, deren Dicarbonsäure-Komponente zu mindestens 50 Carboxyläquivalent -%, besonders bevorzugt ausschließlich aus Adipinsäure und deren Diol-Komponente vorzugsweise zu mindestens 50 Hydroxiäquivalent-% aus 1,4-Dihydroxibutan, 1.6-Dihydroxihexan oder Neopentylglykol besteht.

Geeignete Polyetherdiole c) sind solche, wie sie z. B. unter Verwendung von Diolen oder Wasser als Startermolekül durch Polymerisation von Propylenoxid, den isomeren Butylenoxiden, α-Olefinoxiden und Tetrahydrofuran erhalten werden. Auch entsprechende Copolymerisate sind einsetzbar. Besonders bevorzugt sind reine Polypropylenoxiddiole und Polytetrahydrofurandiole.

Geeignete Polycarbonatdiole c) sind solche auf Lacton - insbesonders ε-Caprolactonbasis sowie Polycarbonate, wie sie durch Umsetzung beispielsweise der oben genannten - zum Aufbau der Polyesterdiole eingesetzten - Diole mit Dialkylcarbonaten, Diarylcarbonaten oder Phosgen zugänglich sind. Besonders geeignete Polycarbonatdiole sind solche auf Basis von Hexandiol und Neopentylglykol.

Auch die geeigneten Diisocyanate d) sind an sich bekannt. Es sind dies aliphatische, aromatische, und heterocyclische Diisocyanate, wie sie z.B. von W. Sirfken in Justus Liebigs Annalen der Chemie, 562, Seiten 75 bis 136 beschrieben werden; beispielsweise Ethylendiisocyanat, 1.4-Tetramethylendiisocyanat, 1.6-Hexamethylendiisocyanat, 1.12-Dodecamethylendiisocyanat, Cyclobutan-1.3-diisocyanat, Cyclohexan-1.3- und -1.4-diisocyanat, sowie beliebige Gemische dieser Isomeren; 1-Isocyanato-3.3.5-trimethyl-5-isocyanatomethyl-cyclohexan (DE-A 1 202 785; US-A 3 401 190), 2.4- und 2.6-hexahydrotoluylendiisocyanat, Hexahydro-1.3- und/oder 1.4-phenylendiisocyanat, Perhydro-2.4' und/oder 4.4'-Diphenylmethandiisocyanat, 1.3- und 1.4-Phenylendiisocyanat, 2.4- und 2.6-Toluylendiisocyanat, sowie beliebige Gemische dieser Isomeren, die stellungsisomeren Diphenylmethandiisocyanate, Tetramethyl- xylylendiisocyanat. Es ist möglich, beliebige Mischungen der vorgenannten Isocyanate zu verwenden.

Bevorzugt eingesetzt werden 1-isocyanato-3.5.5-trimethyl-5-isocyanatomethyl-cyclohexan, Perhydro-4.4'- und/oder 2.4'-diphenylmethandiisocyanat, die isomeren Toluylendiisocyanate und Diphenylmethandiisocyanate und Hexamethylendiisocyanat.

Auch die Polyisocyanate e) sind an sich bekannt.

Es handelt sich um Produkte, wie sie aus Diisocyanaten der aliphatischen und aromatischen Reihe durch Biuretisierung, Allophanatisierung, Trimerisierung, Dimerisierung, aber auch durch Urethanisierung mit kurzkettigen Polyolen einer OH-Funktionalität >2 erhalten werden. Entsprechend können die Polyisocyanate e) neben den NCO-Gruppen auch Biuret, Allophanat, Triazintrion, Uretdion und Urethan-Strukturelemente aufweisen. Es ist auch möglich, unsymmetrische Trimerisate einzusetzen.

Beispiele für derartige Polyisocyanate sind:

Tris-urethan aus 1 Mol Trimethylolpropan und 2 Mol Toluylendiisocyanat; 1.3.5-Tris-(6-isocyanatohexyl)-triazintrion; 1.3-Bis-(6-isocyanatohexyl)-diazacyclobutandion; Mischtrimerisat aus 2 Mol Toluylendiisocyanat und 1 Mol Hexamethylendiisocyanat; Biuret des Hexamethylendiisocyanats; Trimerisat des Isophorondiisocyanats; das durch Umsetzung von 3 Mol Hexamethylendiisocyanat mit einem Mol n-Butanol erhältliche Allophanat; 1.3-Bis-(6-isocyanatohexyl)-4-(6-isocyanatohexyl)-imino-1.3-diaza-5-oxacyclohexandion(2.6).

Die Polyisocyanate e) können auch als Gemische eingesetzt werden.

Bevorzugt werden entsprechende Produkte der aliphatischen Reihe eingesetzt, besonders bevorzugt sind Allophanate, Biurete, Trimerisate und Abmischungen von Trimerisaten mit Uretdionen auf Basis Hexamethylendiisocyanat.

Vorzugsweise enthalten die erfindungsgemäßen Bindemittel noch 0,01 bis 2 Gew.-% an Stabilisatoren.

Bei den Stabilisatoren handelt es sich um an sich bekannte und üblicherweise zur Stabilisierung NCO-funktioneller Produkte eingesetzte Zusätze. Es sind dies sterisch gehinderte Phenole, sterisch gehinderte Amine, Säurehalogenide, organische und anorganische Protonsäuren.

Die Stabilisierung ist insbesonders dann wesentlich, wenn die erfindungsgemäßen Bindemittel bei der Herstellung und/oder Lagerung thermisch stark belastet werden.

Beispiele für geeignete Stabilisatoren sind:

2.4.6-tri-tert.-Butylphenol, 2.6-di-tert.-butyl-p-Kresol; Tetramethylpiperidin und seine Derivate, Benzoylchlorid; Phthaloyldichlorid; Chloressigsäure; 2-Chlorpropionsäure; teilweise verseifte Phosphorsäureester wie Phosphorsäuredibutylester; Phosphorsäurediethylester.

Die Erfindung betrifft auch ein Verfahren zur Herstellung der erfinderischen Prepolymere, daß dadurch gekennzeichne ist, daß man den Copolyether der Komponente a) gegebenenfalls zusammen mit dem Diol c) mit dem Diisocyanat d), gegebenenfalls in Gegenwart eines Lösungsmittel bei einer Temperatur von 20 bis 110°C umsetzt, nach beendeter Reaktion gegebenenfalls mit dem Copolyether b) umsetzt und das erhaltene Reaktionsprodukt gegebenenfalls nach Abtrennung von Restmonomeren der Komponente d) gegebenenfals mit dem Polyisocyanat e) vermischt.

Die Restmonomerenabtrennung der Komponente d) erfolgt vorzugsweise durch Dünnschichtdestillation bei einer Temperatur von 60°C bis 180°C und einem Druck von 0,5 bis 0,01 bar.

Es ist prinzipiell möglich die Polyole a) und gegebenenfalls c) vorzulegen, danach bei niedriger Temperatur das Diisocyanat d) in einem Guß zuzugeben und mit der Prepolymerisierung zu beginnen. Gegebenenfalls können eventuell erforderliche Lösemittel direkt zugesetzt werden, es ist aber auch möglich, diese in jedem Stadium der Synthese oder erst nach Fertigstellung des Bindemittels zuzusetzen. Essentiell ist lediglich, die Copolyether b) erst dann zuzusetzen, wenn die Polyole a) und gegebenenfalls c) umgesetzt sind. Die NCO/OH-Umsetzung ist leicht, beispielsweise durch NCO-Titration, zu verfolgen.

Für die Herstellung der erfindungsgemäßen Bindemittel auch im großtechnischem Maßstab hat sich jedoch eine spezielle Verfahrensvariante als besonders vorteilhaft erwiesen, weil sie eine optimale Temperaturkontrolle erlaubt und zu Produkten mit minimaler Viskosität führt. Diese Variante wird nachfolgend näher beschrieben.

Wenn die erfindungsgemäßen Bindemittel ohne Destillationsschritt (Abtrennung der Restmonomeren) hergestellt werden sollen, wird das Diisocyanat d) zusammen mit gegebenenfalls einzusetzendem Lösemittel und Stabilisatoren vorgelegt. Danach wird zunächst der Copolyether a) und gegebenenfalls das Diol c) zugegeben. Unter Rühren bei Raumtemperatur oder erhöhter Temperatur wird bis zum Erreichen des Ziel-NCO-Wertes umgesetzt. Danach wird gegebenenfalls der Copolyether b) zugegeben und entsprechend verfahren.

Geeignete Lösemittel sind solche, die nicht mit NCO-haltigen Verbindungen unter den Reaktionsbedingungen zu reagieren vermögen, vorzugsweise sind dies Ester, Etherester, Lactone, cyclische Carbonate, Ketone und Alkylaromaten. Die Lösemittel können auch als Gemische eingesetzt werden.

Beispiele für geeignete Lösemittel sind: Butylacetat, Ethylacetat, Propylacetat, 2-Methoxipropylacetat, 3-Ethoxi-propionsäureethylester, ε-Caprolacton, Propylencarbonat, Toluol, Xylol, 1.2-Diacetoxipropan, Aceton, Butanon, Cyclohexanon. Besonders bevorzugt ist Ethylacetat.

Die Menge der Lösemittel kann in weiten Grenzen schwanken. Bevorzugt werden sie in solchen Mengen eingesetzt, daß im fertigem Bindemittel ein Feststoffgehalt von 70 bis 100% resultiert. Bei dieser Verfahrensweise entspricht die eingesetzte Menge an Diisocyanat d) in jedem Fall der im Anspruch 1 genannten. Sollen die erfindungsgemäßen Bindemittel destillativ, insbesondere durch Dünnschichtdestillation aufgearbeitet werden, wird vorzugsweise ohne Zusatz eines Lösemittels gearbeitet. Ansonsten wird verfahren, wie oben beschrieben.

Ein wesentlicher Vorteil dieser Verfahrensvariante ist die Möglichkeit, das Diisocyanat d) in deutlichem Überschuß - bis zum 20-fachen der im Anspruch 1 genannten Menge - einsetzen zu können, weil der Überschuß nach beendeter Umsetzung abgetrennt werden kann. Diese Fahrweise führt zu Bindemitteln mit deutlich reduzierter Eigenviskosität, so daß auch auf den - prinzipiell möglichen - nachträglichen Zusatz von Lösemitteln in vielen Fällen verzichtet werden kann.

Die destillative Aufarbeitung erfolgt durch Dünnschichtdestillation vorzugsweise bei Temperaturen von 60 bis 180°C und Drücken von 0,5 bis 0.01 bar.

In die nach beiden Herstellvarianten hergestellten Bindemittel kann danach gegebenenfalls das Polyisocyanat e) in Mengen gemäß Anspruch 1 eingerührt werden.

Die nach Reaktion der Bindemittel gemäß dem Stand der Technik mit Härtern entstehenden Polymere sind Polyurethan/Polyharnstoffe, im folgenden als Polyurethan bezeichnet.

Die Erfindung betrifft auch Polyurethane, erhältlich durch Umsetzung von den erfindungsgemäßen Bindemitteln mit gegebenenfalls blockierten Diaminen, die gegenüber Isocyanatgruppen reaktive Wasserstoffe enthalten.

Diese Diamine werden auch als sogenannte Zerewitinoff-aktiven Diamine bezeichnet.

Vorzugsweise beträgt das Valverhältnis NCO-Bindemittel zu Amin 1:1 bis 1:0,75.

Unter - gegebenenfalls reversibel blockierten - Diaminen sind vorzugsweise solche zu verstehen, wie sie insbesonders in den DE-A 2 637 115 und DE-A 4 101 700 genannt werden.

Beispiele für reversible Blockierungsmittel sind Aldehyde und Ketone; insbesonders Aceton und Butanon.

Beispiele für Diamine sind:

1.4-Diaminobutan, 1.6-Diaminohexan, 1.4-Diaminocyclohexan, 3.3.5-Trimethyl-5-aminomethyl-cyclohexylamin, 4.4'-Diamino-dicyclohexylmethan, 4.2'-Diamino-dicyclohexylmethan, 2.2'-Diamino-dicyclohexylmethan, Hexahydro-2.4- und 2.6-toluylendiamin, Xylylendiamin, 4.4'-Diamino-3.3'-dimethyl-dicyclohexylmethan, 4.4'-Diamino-3-methyl-3'-ethyl-dicyclohexylmethan.

Die Diamine können auch als Gemische eingesetzt werden.

Weiterhin ist es möglich, sie in modifizierter Form, wie beispielsweise mit einem Unterschuß von Diisocyanaten oder Isocyanatprepolymeren vorverlängert einzusetzen.

Die Diamine(Härter) können auch mit untergeordneten Mengen an Hilfs- und Zuschlagsstoffen, sowie katalytisch aktiven Substanzen formuliert sein.

Beispiele Für derartige Zusätze sind Verlaufshilfsmittel silikonischer Natur, Farbmittel, und katalytisch aktive Mengen an Wasser und/oder organischer Protonsäuren, die gegebenenfalls zur Erhöhung ihrer Aktivität in alpha-Stellung halogensubstituiert sein können.

Derartige Zusätze werden in der Regel den Härtern erst kurz vor ihrer Verwendung zugegeben.

Die erfindungsgemäßen NCO-funktionellen Bindemittel dienen zur Herstellung wasserdampfdurchlässig beschichteter flexibler Substrate, besonders Leder.

Der Aufbau der Beschichtung erfolgt in an sich bekannter Weise durch eine 2-Komponenten-Reaktion aus dem erfindungsgemäßem Bindemittel und einem Härter, wobei Polyurethan-polyharnstoffe entstehen. Repräsentativ für dieses Verfahren sind z. B. DE-A 2 570 524; DE-A 2 637 115, DE-A 2 826 232, DE-A 4 101 700 und dort zitierte Literatur. Auch die erfindungsgemäßen Bindemittel werden entsprechend diesem Stand der Technik appliziert.

Die Erfindung betrifft weiterhin ein Verfahren zur Beschichtung von Substraten, das dadurch gekennzeichnet ist, daß erfindungsgemäße Bindemittel mit einem Härter (Diamin mit gegenüber NCO-Gruppen reaktiven Wasserstoffatomen) gemischt werden und die Mischung mittels der Direkt- oder Umkehrbeschichtungsmethode auf das Substrat aufgebracht wird.

Als Substrate kommen vorzugsweise flexible Materialien, insbesondere Textil und Leder in Frage, insbesondere Leder.

Bevorzugt ist die Umkehrbeschichtungsmethode.

Dabei wird vorzugsweise die Mischung aus Bindemittel und Härter zunächst auf einen Trennträger aufgebracht. Das zu beschichtende Substrat wird dann in die reagierende Mischung eingelegt und nach beendeter Reaktion das beschichtete Substrat vom Trennträger abgezogen.

Die Erfindung betrifft auch die mit den erfindungsgemäßen Polyurethanen beschichteten Substrate.

Bei Verwendung der erfindungsgemäßen NCO- funktionellen Bindemittel als NCO-Komponente im beschriebenem Verfahren werden wasserdampfdurchlässig beschichtete flexible Substrate - besonders Leder - auf einfache Art und Weise erhalten.

## Herstellbeispiele

Eingesetzte Ausgangsmaterialien

Isocyanate

1    Diphenylmethan-diisocyanat (Isomerengemisch), NCO — Gehalt: 33.6%

2    Hexamethylendiisocyanat; NCO-Gehalt: 50 %

3    Gemisch aus Isocanurat/Uretdion des Hexamethylendiisocyanats, mit 15 Gew.-% Uretdion; NCO-Gehalt 22 %

4    Trimerisat des Hexamethylendiisocyanats; NCO-Gehalt: 22 %

Polyole

1    Trimethylolpropan - gestarteter Ethylenoxid (EO)/Propylenoxid (PO) - Copolyether mit 62,5 Gew.-% PO und17,5 Gew.-% EO, wobei der Ethylenoxidanteil als endständiger Block vorliegt.
Kenndaten: Mn: 4800; OHZ: 35; F: 3.

2    Propylenglykol - gestarteter Ethylenoxid / Propylenoxid - Copolyether mit 50 Gew.-% PO und 50 Gew.% EO, wobei 19 % des EO-Anteils als endständiger Block vorliegen.
Kenndaten: Mn: 2000: OHZ: 56; F: 3

3    Polyester aus Adipinsäure und Hexandiol/Neopentylglykol (Molverhältnis: 1,65:1)
Kenndaten: Mn: 1700; OHZ: 66; F: 2

## Hergestellte Bindemittel:

Bindemittel 1

In einem 2l-Kolben werden 500 g Isocyanat 2 und 1,25 g Phosphorsäuredibutylester vorgelegt. Unter Rühren werden 615 g Copolyether 1 zugegeben. Es wird auf 100°C Innentemperatur erhitzt und bei dieser Temperatur 30 min gerührt. Der Ansatz wird auf 80°C gekühlt. Es werden 500 g des Copolyethers 2 zugegeben, wobei die Temperatur wieder auf 100°C steigt. Es wird bei 100°C gerührt, bis der NCO-Gehalt auf 13 % gefallen ist. Nach Zugabe von weiteren 0,6 g Phosphorsäuredibutylester wird das Produkt bei 50 mbar und 160°C einer Dünnschichtdestillation unterworfen, um den Überschuß an Isocyanat 1 abzutrennen.

Es resultiert ein niedrigviskoses Harz mit einem NCO-Gehalt von 3,06 % (Vorprodukt). In 250 g dieses Harzes werden 16 g Isocyanat 3 eingerührt.

Das resultierende Produkt hat einen NCO-Gehalt von 4,2 %; eine Viskosität von 2400 mPa s (22°C) und ein Äquivalentgewicht von 1000 g pro Val NCO.

Bindemittel 2

250 g Vorprodukt für Bindemittel 1 werden mit 15 g Isocanat 4 vermischt. Das resultierende Produkt hat einen NCO-Gehalt von 4,2 % und eine Viskosität von 2300 mPa s. 1000 g des Produktes entsprechen 1 Val NCO.

Bindemittel 3

In einem Sulfierbecher werden 500 g (4 Val NCO) Isocyanat 1, 2,8 g Phosphorsäuredibütylester und 0,42 g 4-Methyl-2.6-di-tert.butylphenol vorgelegt. Unter Rühren werden 922,5 g (0,5766 Val OH) Copolyether 1 schnell zugetropft, wobei die Temperatur auf 60°C steigt. Nach 6 h bei dieser Temperatur ist ein NCO-Wert von 10,1 % erreicht. Ohne Kühlung werden nun 750 g (0,75 Val OH) des Copolyethers 2 schnell zugetropft, wobei die Temperatur auf 70°C steigt. Es wird bei dieser Temperatur gerührt, bis ein NCO-Wert von 5,16 % erreicht ist (3 h). Das Produkt wird auf 40°C gekühlt, und mit 544 g Ethylacetat vermischt.

Es resultiert eine klare Lösung mit einem NCO-Gehalt von 4,1 %, einer Viskositat von 750 mPa s (22°C) und einem Feststoffgehalt von 80 %. 1024 g dieser Lösung entsprechen einem Val NCO.

Bindemittel 4

74 g (0,087 Val OH) des Polyesters 3 werden bei 100°C und 0,01 bar 30 min lang entwässert. Danach wird der Polyester mit 553,5 g (0,346 Val OH) des Copolyethers 1 und 1,25 g Phosphorsäuredibutylester vermischt. Zu dieser Mischung werden bei 40°C in einem Guß unter Rühren 500 g (5,95 Val NCO) Isocyanat 2 gegeben. Es wird auf 100°C erhitzt. Nach 3 h ist ein NCO-Gehalt von 20,5 % erreicht. Man kühlt auf 80°C und gibt 450 g (0.45 Val OH) des Copolyethers 2 schnell zu. Man rührt weiter bei 100°C. Nach weiteren 3 h ist ein NCO-Gehalt von 13,4 % erreicht.

Das Reaktionsprodukt wird wie bei Bindemittel 1 durch Dünnschichtdestillation von überschüssigem Isocyanat 2 abgetrennt. Man erhält ein Harz der Viskosität 2770 mPa s mit einem NCO-Gehalt von 3,4 %.

480 g dieses Harzes werden mit 20 g des Isocyanats 3 vermischt. Die Viskosität ändert sich nicht, das resultierende Produkt hat einen NCO-Gehalt von 4,14 %. 1014 g des Produkts entsprechen einem Val NCO.

Bindemittel 5

In einem Kolben mit Rührer und Rückflußkühler werden 235 g (1,88 Val NCO) Isocyanat 1, 300 g Ethylacetat und 0,34 g Phosphorsäuredibutylester vorgelegt. Zu dieser Mischung werden bei Raumtemperatur unter Rühren 964 g (0,6025 Val OH) Copolyether 1 schnell zugegeben. Danach wird auf Rückflußtemperatur erhitzt. Nach 5 h ist der NCO-Gehalt auf 3,6 % gefallen.

Das Produkt hat eine Viskosität von 800 mPa s (22°C) und einen Feststoffgehalt von 80 %. 1167 g des Produkts entsprechen einem Val NCO.

Bindemittel 6

In einem Kolben mit Rührer und Rückflußkühler wird eine Mischung aus 188 g (0,2212 Val OH) entwässerter Polyester 3, 439 g (0,2744 Val OH) Copolyether 1, 200 g Ethylacetat und 0,5 g Phosphorsäuredibutylester vorgelegt. In diese Mischung werden in einem Guß 172,5 g (1,38 Val NCO) Isocyanat 1 gegeben. Man erhitzt auf Rückflußtemperatur. Nach 5 h Rühren bei dieser Temperatur ist ein NCO-Gehalt von 3,7 %erreicht.

Das erhaltene Produkt hat eine Viskosität von 1100 mPa s (22°C) und einen Feststoffgehalt von 80 %. 1135 g des Produkts entsprechen einem Val NCO.

Bindemittel 7 (für Vergleichsversuch)

Nachstellung Prepolymer 1 der DE 3 741 538 (EP 319 816)
Produktkenndaten: NCO-Gehalt: 3,43 %; Viskosität: 2000 mPa s (22°C);
Festkörper: 80 %.1225 g des Produkts entsprechen einem Val NCO.

Bindemittel 8 (für Vergleichsversuch)

Nachstellung Prepolymer 3 der DE 3 741 538
Produktkenndaten: NCO-Gehalt: 5,8%; Viskosität: 7000 mPa s;
Äquivalentgewicht: 725 g pro Val NCO.

Herstellung der in den Verwendungsbeispielen eingesetzten Härter

Härter 1

Es wird eine Mischung aus 502 g Butanon, 85 g 3.3.5-Trimethyl-5-aminomethyl-cyclohexylamin und 13 g Wasser hergestellt. Die Mischung wird 24 h bei 50°C getempert und ist dann gebrauchsfertig. 600 g der Mischung entsprechen 1 Val $NH_2$.

Härter 2

Es wird eine Mischung aus 457 g Butanon, 119 g 3.3'-Dimethyl-4.4'-diamino-dicyclohexylmethan und 24 g Wasser hergestellt. Die Mischung wird 24 h bei 50°C getempert und ist danach gebrauchsfertig. 600 g der Mischung entsprechen 1 Val $NH_2$.

**Verwendungsbeispiele**

Herstellung der beschichteten Leder.

1) In ein Filmziehgerät, bestehend aus zwei polierten Walzen, die auf einen exakten Abstand eingestellt werden können, wird vor die hintere Walze ein Trennpapier eingelegt. Mit einer Fühlerblattlehre wird der Abstand zwischen Papier und vorderer Walze eingestellt. Dieser Abstand entspricht der Filmdicke (naß) der resultierenden Beschichtung.

2) In einem Becherglas wird das Bindemittel mit dem Härter 30 sec lang intensiv vermischt. Die Mengenverhältnisse Bindemittel/Härter errechnen sich aus dem gewähltem Valverhältnis NCO (Bindemittel)/Amin (Härter) in Kombination mit den für diese Komponenten angegebenen Äquivalenzmengen.
Die Mischung wird auf den Spalt zwischen Papier und vorderer Walze gegossen (sie tropft aus Viskositätsgründen nicht durch). Sofort wird das Papier durch den Walzenspalt senkrecht nach unten weggezogen, wobei auf dem Papier der entsprechende Film entsteht.
Auf diesen Film wird im noch klebrigem Zustand das Leder (kurzfasriger Chromspalt) aufgelegt und mit einer Gummirolle von Hand mit mäßigem Druck einkaschiert. Danach wird das Muster im Umlufttrockenschrank 5 min bei 80°C getrocknet. Man kühlt auf Raumtemperatur und zieht das Trennpapier ab.
Die so erhaltenen beschichteten Spaltleder werden auf Knickechtheit (DIN 53 351 = EN 13 334) und Wasserdampfdurchlässigkeit (DIN 53 333 = DIN EN 12 991) geprüft.
Für die Herstellung der beschichteten Leder gemäß dieser Vorschrift wurden einheitlich folgende Parameter gewählt:
Valverhältnis Bindemittel/Härter = 1,08/1; Filmdicke (naß): 0,2 mm. Diese Parameter entsprechen nahezu den unter produktionstechnischen Bedingungen üblichen.

Die erhaltenen Resultate sind in der nachfolgenden Tabelle zusammengefasst.

| Bindemittel | Härter | Trockenknick | Nassknick | Kälteknick | WDD |
|---|---|---|---|---|---|
| 1 | 1 | 100 000 / o | 20 000 / o | 20 000 / o | 3,7 |
| 1 | 2 | 75 000 / x | 20 000 / x | 20 000 / x | 2,08 |
| 2 | 1 | 100 000 / x | 20 000 / o | 20 000 / o | 3,5 |
| 3 | 1 | 100 000 / o | 20 000 / o | 20 000 / o | 1,29 |
| 4 | 1 | 80 000 / x | 15 000 / x | 10 000 / o | 2,1 |
| 5 | 1 | 100 000 / o | 20 000 / o | 20 000 / o | 1,5 |
| 5 | 2 | 75 000 / x | 20 000 / o | 10 000 / o | 1,6 |
| 6 | 1 | 100 000 / o | 20 000 / o | 10 000 / o | 1,3 |
| 6 | 2 | 75 000 / o | 15 000 / o | 10 000 / o | 1,2 |

(fortgesetzt)

| Bindemittel | Härter | Trockenknick | Nassknick | Kälteknick | WDD |
|---|---|---|---|---|---|
| 7 | 1 | 100 000 / o | 20 000 / o | 10 000 / o | 0,6 |

Legende:
Die Kälteknickungen wurden bei — 10°C durchgeführt; bei allen Knickungen gibt die Zahl vor dem Schrägstrich die Anzahl der Knickungen an; das Symbol nach dem Schrägstrich ist eine Bewertung der Beschädigung der Beschichtung: o = unbeschädigt; x = ganz leichte Beschädigung.
Alle Knickversuche wurden beim ersten Anzeichen einer Beschädigung abgebrochen, so daß die Tabelle keine Resultate mit mittlerer Beschädigung oder völliger Zerstörung enthält.
Die Werte der Wasserdampfdurchlässigkeit (WDD) verstehen sich in $mg/cm^2$ h.

Die Resultate belegen, daß die physikalischen Lederechtheiten der mit den erfindungsgemäßen Bindemitteln erhaltenen beschichteten Spaltleder in Ordnung sind; die Wasserdampfdurchlässigkeiten sind um den Faktor 2 bis 6 besser als bei dem - zum Vergleich unter identischen Applikationsbedingungen mit getesteten - und den Stand der Technik repräsentierenden - Bindemittel 7.

Die zum weiteren Vergleich versuchte Applikation des Bindemittels 8 war weder mit Härter 1 noch mit Härter 2 möglich, weil dieses Bindemittel schon beim Mischversuch mit dem Härter sofort aufschäumte und deshalb kein Film erzeugt werden konnte.

**Patentansprüche**

1. Isocyanathaltige Bindemittel mit einem - bezogen auf Bindemittel-NCO-Gehalt von 2 bis 8 Gew.-% aufgebaut aus:

   a) 20 bis 90 Gew.-% eines Ethylenoxid-haltigen Copolyethers der mittleren Molmasse 2500 bis 6000, einer OH-Funktionalität von 3 und einem Gehalt an Ethylenoxid von 5 bis 20 Gew.-%, wobei mehr als 90 Gew.-% der Ethylenoxid-Einheiten als Block vorliegen,

   b) 0 bis 50 Gew.-%, vorzugsweise 10 bis 50 Gew.-% eines Ethylenoxidhaltigen Copolyethers der mittleren Molmasse 1500 bis 3000, einer OH-Funktionalität von 2 und einem Gehalt an Ethylenoxid von 40 bis 60 Gew.-%, wobei weniger als 20 Gew.-% der Ethylenoxid-Einheiten als Block vorliegt.

   c) 0 bis 30 Gew.-% eines Ethylenoxid-freien Diols der mittleren Molmasse 1500 bis 3000,

   d) 10 bis 30 Gew.-% eines Diisocyanats der mittleren Molmasse 140 bis 340 und

   e) 0 bis 10 Gew.-% eines Polyisocyanats der NCO-Funktionalität 2,5 bis 4,5

   wobei der Gesamtethylenoxidgehalt von a) + b) 5 bis 40 Gew.-% beträgt, das Molverhältnis von b) zu a) 0 bis 3 beträgt und das Valverhältnis OH von a) + b) +c)  zu NCO von d) kleiner 0,5 ist.

2. Verfahren zur Herstellung von Prepolymeren gemäß Anspruch 1, dadurch gekennzeichnet, daß man den Copolyether der Komponente a) gegebenenfalls zusammen mit dem Diol c) mit dem Diisocyanat d), gegebenenfalls in Gegenwart eines geeigneten Lösungsmittel bei einer Temperatur von 20 bis 110°C umsetzt, nach beendeter Reaktion gegebenenfalls mit dem Copolyether b) umsetzt und das erhaltene Reaktionsprodukt gegebenenfalls nach Abtrennung von Restmonomeren der Komponente d) gegebenenfalls mit dem Polyisocyanat e) vermischt.

3. Polyurethane, erhältlich durch Umsetzung von den isocyanathaltigen Bindemitteln gemäß Anspruch 1 mit gegebenenfalls blockierten Diaminen, die gegenüber Isocyanatgruppen reaktive Wasserstoffe enthalten.

4. Verfahren zur Beschichtung von Substraten, dadurch gekennzeichnet, daß das isocyanathaltige Bindemittel gemäß Anspruch 1 mit einem Härter gemischt wird und die Mischung mittels der Direkt- oder Umkehrbeschichtungsmethode auf das Substrat aufgebracht wird.

5. Substrate, die mit einem Polyurethan gemäß Anspruch 3 beschichtet sind.

6. Leder, beschichtet mit einem Polyurethan gemäß Anspruch 3.